# EUROPEAN PATENT SPECIFICATION

(11) **EP 4 580 111 B1**
(45) Date of publication and mention of the grant of the patent: **29.04.2026**
(21) Application number: 24167159.3
(22) Date of filing: 28.03.2024
(51) Int. Cl.: H04L 9/00, H04L 9/08

(54) **QUANTUM HOMOMORPHIC ENCRYPTION SYSTEM AND METHOD**
QUANTENHOMOMORPHES VERSCHLÜSSELUNGSSYSTEM UND -VERFAHREN
SYSTÈME ET PROCÉDÉ DE CHIFFREMENT HOMOMORPHE QUANTIQUE

(30) Priority: 29.12.2023 KR 20230196238
(43) Date of publication of application: 02.07.2025
(73) Proprietor: Korea Institute of Science & Technology Information, Daejeon 34141 (KR)
(72) Inventor: Sohn, Il Kwon, DAEJEON (KR); Bae, Kwang Il, DAEJEON (KR); Lee, Won Hyuk, SEJONGI-SI (KR)
(74) Representative: Glawe, Delfs, Moll

(56) References cited:
- YINGKAI OUYANG ET AL: "A general framework for the composition of quantum homomorphic encryption & quantum error correction", ARXIV.ORG, CORNELL UNIVERSITY LIBRARY, 201 OLIN LIBRARY CORNELL UNIVERSITY ITHACA, NY 14853, 22 April 2022 (2022-04-22), XP091207712
- STEANE A M: "Space, Time, Parallelism and Noise Requirements for Reliable Quantum Computing", FORTSCHRITTE DER PHYSIK, WILEY-VCH, BERLIN, vol. 46, 19 April 1999 (1999-04-19), pages 443 - 457, XP072473930, ISSN: 0015-8208, DOI: 10.1002/(SICI)1521-3978(199806)46:4/5<443::AID-PROP443>3.0.CO;2-8

## Description

### BACKGROUND

### 1. Field

The present disclosure relates to a quantum homomorphic encryption method and system.

### 2. Description of the Related Art

Homomorphic encryption is a technology that allows for computations to be directly performed on encrypted data without the need to decrypt the encrypted data first. Since there is no need to decrypt the encrypted data using a secret key, there is no risk of exposing the secret key or the original data.

Quantum homomorphic encryption can be constructed using quantum error correction code. The quantum error correction code is a technology that reduces the error rate of basic operations performed by quantum computers, thereby controlling the overall operation error rate.

A conventional quantum homomorphic encryption technology perform encoding for quantum homomorphic encryption and encoding for quantum error correction separately.
The document YINGKAI OUYANG ET AL: "A general framework for the composition of quantum homomorphic encryption & quantum error correction", ARXIV.ORG, CORNELL UNIVERSITY LIBRARY, 201 OLIN LIBRARY CORNELL UNIVERSITY ITHACA, NY 14853, 22 April 2022 (2022-04-22), XP091207712 discloses framework for integrating quantum homomorphic encryption and quantum error correction according to a conventional quantum homomorphic encryption technology which performs a total of two encoding processes for quantum homomorphic encryption.
The document STEANE A M: "Space, Time, Parallelism and Noise Requirements for Reliable Quantum Computing", FORTSCHRITTE DER PHYSIK, WILEY-VCH, BERLIN, vol. 46, 19 April 1999 (1999-04-19), pages 443-457, XP072473930, ISSN: 0015-8208, DOI: 10.1002/(SICI)1521-3978(199806)46:4/5 443::AID-PROP4433.0.CO;2-8 discloses an analysis of quantum error correction including the use of prepared ancilla blocks.
Since the conventional quantum homomorphic encryption technology requires two encoding processes, they essentially have the same structure as existing concatenated encoding techniques, resulting in a high resource demand for operations. Additionally, the resources for error correction and the resources for encryption are separate, leading to the disadvantage that error correction capability and security are considered independent.

Therefore, there is a demand for a technology that can perform quantum error correction encoding once on data, thereby enabling quantum error correction and quantum homomorphic encryption simultaneously.

### SUMMARY

Aspects of the present disclosure provide a quantum homomorphic encryption method and system that can perform quantum error correction and quantum homomorphic encryption simultaneously by performing quantum error correction encoding.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

According to an aspect of the present disclosure, there is provided a quantum homomorphic encryption method performed by a computing device. The method may comprise creating a first qubit state that includes ancilla qubits, by performing quantum error correction encoding on data, creating a second qubit state that includes the first qubit state, by grouping the first qubit state and encrypting the second qubit state by performing a random permutation on the second qubit state.

In some embodiments, the ancilla qubits may include maximally mixed state (MMS) qubits and zero qubits, and the creating the first qubit state may comprise generating first data by padding the data with the MMS qubits, generating second data by concatenating the first data and the zero qubits and encoding the second data.

In some embodiments, the encoding the second data may comprise encoding the second data using a Calderbank-Shor-Steane (CSS) code.

In some embodiments, the encoding the second data may comprise encoding the second data using a doubly-even CSS code.

The creating the second qubit state comprises generating as many ancilla qubits as there are qubits included in the first qubit state, creating a plurality of third qubit states by grouping the qubits included in the first qubit state and the ancilla qubits and concatenating the third qubit states.

In some embodiments, the generating as many ancilla qubits as there are qubits included in the first qubit state may comprise generating (n × (m - 1)) ancilla qubits if a number of the qubits included in the first qubit state is n.

In some embodiments, the creating the third qubit states may comprise grouping one qubit from the first qubit state and (m - 1) qubits from the ancilla qubits if a number of the qubits included in the first qubit state is n and a number of the ancilla qubits is (n × (m - 1).

The encrypting the second qubit state comprises performing the random permutation on each of the third qubit states.

According to another aspect of the present disclosure, there is provided a quantum homomorphic encryption system. The system may comprise at least one processor and a memory storing a computer program, which is executed by the at least one processor, wherein the computer program includes instructions for performing operations of: creating a first qubit state that includes ancilla qubits, by performing quantum error correction encoding on data, creating a second qubit state that includes the first qubit state, by grouping the first qubit state and encrypting the second qubit state by performing a random permutation on the second qubit state.

In some embodiments, the ancilla qubits may include maximally mixed state (MMS) qubits and zero qubits, and the operation of creating the first qubit state may comprise generating first data by padding the data with the MMS qubits, generating second data by concatenating the first data and the zero qubits and encoding the second data.

In some embodiments, the operation of creating the second qubit state may comprise generating as many ancilla qubits as there are qubits included in the first qubit state, creating a plurality of third qubit states by grouping the qubits included in the first qubit state and the ancilla qubits and concatenating the third qubit states.

In some embodiments, the operation of creating the third qubit states may comprise grouping one qubit from the first qubit state and (m - 1) qubits from the ancilla qubits if a number of the qubits included in the first qubit state is n and a number of the ancilla qubits is (n × (m - 1).

In some embodiments, the operation of encrypting the second qubit state may comprise performing the random permutation on each of the third qubit states.
According to still another aspect of the present disclosure, there is provided a computer program recorded on a computer-readable recording medium. The computer program may execute the steps of creating a first qubit state that includes ancilla qubits, by performing quantum error correction encoding on data, creating a second qubit state that includes the first qubit state, by grouping the first qubit state and encrypting the second qubit state by performing a random permutation on the second qubit state.

According to the aforementioned and other embodiments of the present disclosure, quantum error correction and quantum homomorphic encryption can be completed simultaneously by performing quantum error correction encoding.

Additionally, it is possible to use computational resources more efficiently compared to a conventional quantum error correction encoding-based quantum homomorphic encryption technique.

It should be noted that the effects of the present disclosure are not limited to those described above, and other effects of the present disclosure will be apparent from the following description.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is a schematic view illustrating a conventional quantum homomorphic encryption technology;
FIG. 2 is a block diagram of a quantum homomorphic encryption system according to some embodiments of the present disclosure;
FIG. 3 is a flowchart illustrating operations of a quantum homomorphic encryption method according to some embodiments of the present disclosure;
FIG. 4 is a detailed flowchart illustrating the quantum homomorphic encryption method of FIG. 3;
FIGS. 5 and 6 are schematic views illustrating exemplary applications of the quantum homomorphic encryption method of FIG. 3;
FIG. 7 is a detailed flowchart illustrating the quantum homomorphic encryption method of FIG. 3;
FIGS. 8 and 9 are schematic views illustrating other exemplary applications of the quantum homomorphic encryption method of FIG. 3; and
FIG. 10 is a hardware configuration view of an exemplary computing system not covered by the claims.

### DETAILED DESCRIPTION

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, embodiments of the present disclosure will be described with reference to the attached drawings.

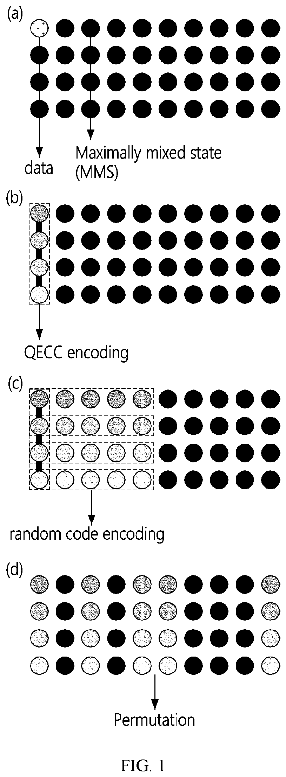

A conventional quantum homomorphic encryption technology will hereinafter be described with reference to FIG. 1. FIG. 1 is a schematic view for explaining the operation of the conventional quantum homomorphic encryption technology.

Referring to FIG. 1, steps (a) through (d) show how the conventional quantum homomorphic encryption technology performs quantum homomorphic encryption based on quantum error correction encoding. Specifically, FIG. 1 illustrates how a single data qubit is encoded, across rows, into a 4-qubit code, then mapped to a random quantum code, and finally encrypted with a permutation key.

In step (a), the data qubit exists in a first row and column. In step (b), error correction encoding for quantum error correction is applied to the first column including the data qubit. In step (c), a first half of each row is subject to random code encoding for quantum homomorphic encryption and is thereby encoded identically. In step (d), the columns are arranged according to a permutation key. Steps (a) through (c) are steps for performing encoding, and step (d) is a step for performing encryption.

Referring to FIG. 1, the conventional quantum homomorphic encryption technology performs a total of two encoding processes for quantum homomorphic encryption by conducting steps (b) and (c). As a result, the conventional quantum homomorphic encryption technology has the disadvantage of requiring a large amount of resources for operations and suffers from the issue of error correction capability and security being separate because the resources used for error correction and the resources used for encryption are separate.

In order to address the above problems, the present disclosure presents a quantum homomorphic encryption method that can perform quantum error correction and quantum homomorphic encryption simultaneously by performing a single quantum error correction encoding.

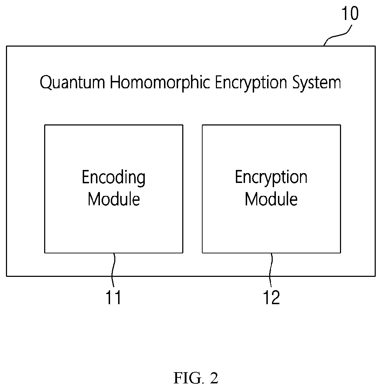

Various embodiments of the present disclosure will hereinafter be described with reference to FIG. 2 and the subsequent figures.

Specifically, the structure and operation of a homomorphic encryption system according to some embodiments of the present disclosure will hereinafter be explained with reference to FIG. 2. FIG. 2 is a configuration view illustrating a homomorphic encryption system according to some embodiments of the present disclosure.

Referring to FIG. 2, a homomorphic encryption system 10 is a computing device/system equipped with the capability to perform quantum error correction and quantum homomorphic encryption. For example, the homomorphic encryption system 10 may perform an encoding process for quantum error correction and may perform homomorphic encryption based on the encoding process.

As illustrated, the homomorphic encryption system 10 may be configured to include an encoding module 11 and an encryption module 12, but the present disclosure is not limited thereto. In some embodiments, the homomorphic encryption system 10 may be configured to further include modules/devices/systems that are not illustrated in FIG. 2. Alternatively, the homomorphic encryption system 10 may be configured to not include at least one of the components of the homomorphic encryption system 10.

The encoding module 11 may perform quantum error correction encoding for data. For example, the encoding module 11 may perform quantum error correction encoding by generating a first qubit state that includes data and ancilla qubits.

The encryption module 12 may group the first qubit state created by the encoding module 11 to create a second qubit state that includes the first qubit state. The encryption module 12 may perform quantum homomorphic encryption by executing a random permutation on the second qubit state.

As a result of applying the homomorphic encryption method according to the present disclosure, the homomorphic encryption system 10 may perform quantum error correction and quantum homomorphic encryption simultaneously by performing quantum error correction encoding only once.

Each of the components of the homomorphic encryption system 10 may be implemented as at least one computing device. For example, all functionalities of the homomorphic encryption system 10 may be implemented on a single computing device, a first functionality of the homomorphic encryption system 10 may be implemented on a first computing device, and a second functionality of the homomorphic encryption system 10 may be implemented on a second computing device. Alternatively, a specific functionality of the homomorphic encryption system 10 may be implemented across multiple computing devices.

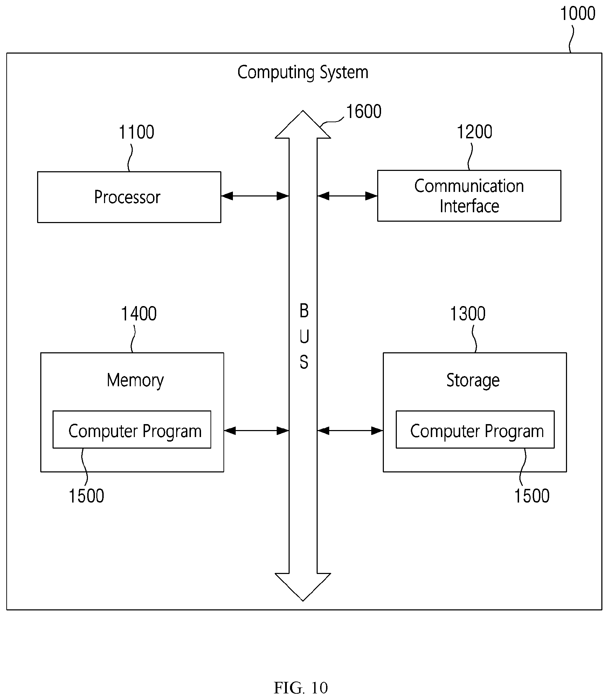

Here, the term "computing device" may include any device equipped with computing functionalities, and an example of such computing device will be described later with reference to FIG. 10. A computing device may also be referred to as a computing system in consideration that it consists of various components (e.g., memories, processors, etc.) interacting with one another. Obviously, the term "computing system" may also encompass the concept of a collection of multiple computing devices interacting with one another.

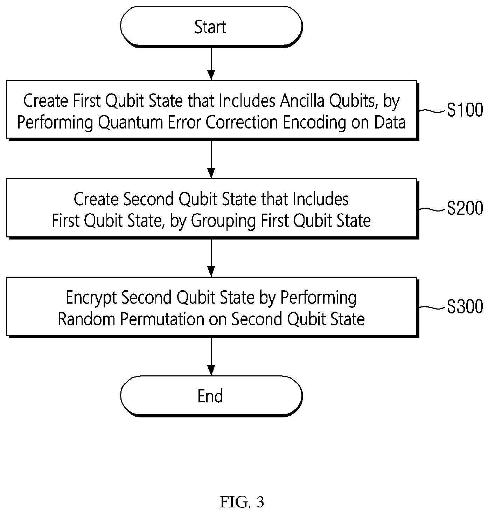

The structure and operation of the homomorphic encryption system 10 have been described so far with reference to FIG. 2. Various exemplary methods that can be performed in the homomorphic encryption system 10 will hereinafter be described with reference to FIG. 3 and the subsequent figures.

For convenience, it is assumed that all steps/operations of methods to be described are performed by the homomorphic encryption system 10. Therefore, even if the subject of a specific step/operation is omitted, it should be understood as being performed by the homomorphic encryption system 10. However, in actual environments, some steps/operations of the methods to be described may be performed by different computing devices.

First, a quantum homomorphic encryption method according to some embodiments of the present disclosure will hereinafter be described with reference to FIG. 3. FIG. 3 is a flowchart illustrating operations of the quantum homomorphic encryption method according to some embodiments of the present disclosure.

Referring to FIG. 3, the homomorphic encryption system 10 may create a first qubit state that includes ancilla qubits by performing quantum error correction encoding on data (S100). The data may be data with specific quantum information. In the present disclosure, the data refers to data with a capacity of 1 qubit. The ancilla qubits may include maximally mixed state (MMS) qubits and zero qubits. The MMS qubits refer to qubits where state 0 or 1 occurs at a probability of 1/2. The zero qubits refer to qubits where state 0 occurs.

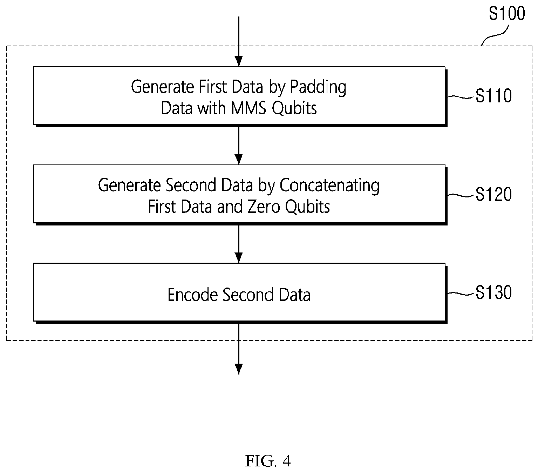

The generation of the first qubit state through quantum error correction encoding will be described later with reference to FIGS. 4 through 6.

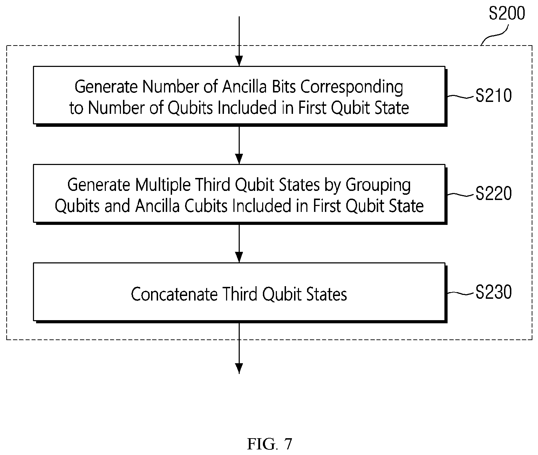

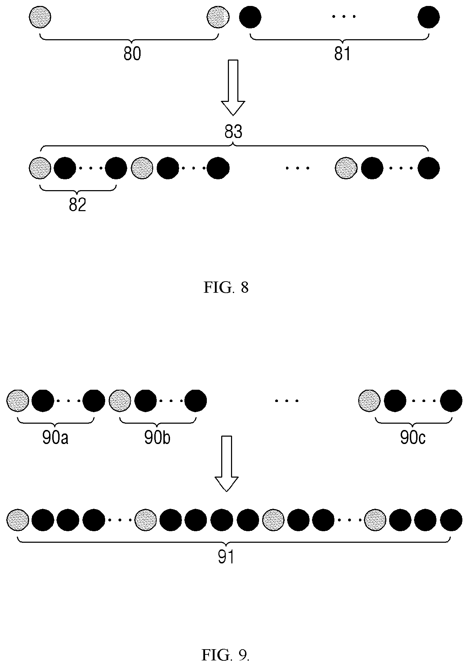

Referring back to FIG. 3, the homomorphic encryption system 10 may group the first qubit state and may thereby create a second qubit state that includes the first qubit state (S200). The creation of the second qubit state by the homomorphic encryption system 10 will be described later with reference to FIGS. 7 and 8.

Thereafter, the homomorphic encryption system 10 may encrypt the second qubit state by performing a random permutation on the second qubit state (S300). The encryption of the second qubit state by the homomorphic encryption system 10 will be described later with reference to FIG. 9.

According to the embodiment of FIG. 3, the homomorphic encryption system 10 may perform quantum error correction and quantum homomorphic encryption simultaneously by performing a single quantum error correction encoding process. Therefore, the embodiment of FIG. 3 has the advantage of efficiently utilizing computational resources by reducing the amount of computation compared to a conventional quantum error correction code-based quantum homomorphic encryption technology.

A method of performing quantum error correction encoding on data will hereinafter be described with reference to FIG. 4. FIG. 4 is a detailed flowchart illustrating operations as performed in the quantum homomorphic encryption method of FIG. 3.

Referring to FIG. 4, the homomorphic encryption system 10 may generate first data by padding the data from step S100 with MMS qubits (S110). Here, the term "padding" refers to adding qubits to the beginning, middle, and/or end of the data before encryption.

Thereafter, the homomorphic encryption system 10 may generate second data by concatenating zero qubits to the first data (S120). Unlike in the conventional quantum homomorphic encryption technology, the homomorphic encryption system 10 may concatenate plurality of zero qubits at the end of the first data.

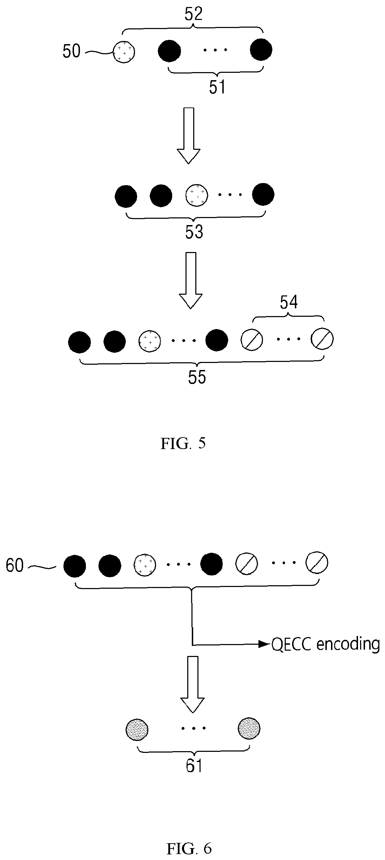

The first data and the second data will hereinafter be described with reference to FIG. 5.

FIG. 5 illustrates first data 52 and second data 55. Referring to FIG. 5, the homomorphic encryption system 10 may generate the first data 52 by padding data 50 included in the first data 52 with a plurality of MMS qubits 51. Since the data 50 and the MMS qubits 51 are mixed, the homomorphic encryption system 10 can enhance the security of the data 50. The greater the number of MMS qubits 51 that are added, the more difficult it becomes to retrieve the data 50 from the first data 52, and the better the security of the data 50.

Thereafter, the homomorphic encryption system 10 rearranges the first data 52 into first data 53 by randomly permuting the data 50 and the MMS qubits 51 included in the first data 52.

Thereafter, the homomorphic encryption system 10 generates the second data 55 by concatenating a plurality of zero qubits 54 to the first data 53. The second data 55 may be used to perform quantum error correction encoding.

Referring back to FIG. 4, the homomorphic encryption system 10 may encode the second data (S130). Step S130 will hereinafter be described with reference to FIG. 6. FIG. 6 is a schematic view illustrating an exemplary application of the quantum homomorphic encryption method according to some embodiments of the present disclosure.

Referring to FIG. 6, the homomorphic encryption system 10 may perform encoding for quantum error correction code (QECC) on second data 60. As a result, a first qubit state 61 that includes ancilla qubits may be created.

In this case, the homomorphic encryption system 10 may use a Calderbank-Shor-Steane (CSS) code to encode the second data 60. In this case, the homomorphic encryption system 10 can extract an encrypted syndrome and can thereby have the advantage of enabling error correction. The CSS code is already well known in the art to which the present disclosure pertains, and thus, a detailed description thereof will be omitted.

Alternatively, in some embodiments, the homomorphic encryption system 10 may encode the second data 60 using a doubly-even CSS code. In this case, the homomorphic encryption system 10 can have the advantage of performing a transversal S gate operation. The transversal S gate operation is already well known in the art to which the present disclosure pertains, and thus, a detailed description thereof will be omitted.

It will hereinafter be described with reference to FIG. 7 how the homomorphic encryption system 10 creates the second qubit state. FIG. 7 is a detailed flowchart illustrating operations as performed in the quantum homomorphic encryption method of FIG. 3.

Referring to FIG. 7, the homomorphic encryption system 10 may generate a number of ancilla qubits corresponding to the number of qubits included in the first qubit state (S210). The ancilla qubits may be MMS qubits, but the present disclosure is not limited thereto.

When the number of qubits included in the first qubit state is n, the homomorphic encryption system 10 may generate {n × (m - 1)} ancilla qubits.

Thereafter, the homomorphic encryption system 10 may group the qubits included in the first qubit state with the ancilla qubits and may thereby create a plurality of third qubit states (S220). When the number of qubits included in the first qubit state is n, and the number of ancilla qubits is {n × (m - 1)}, the homomorphic encryption system 10 may group one qubit from the first qubit state with (m - 1) qubits from the ancilla qubits.

Thereafter, the homomorphic encryption system 10 may concatenate the third qubit states created in step S220 and may thereby create a second qubit state that includes the first qubit state (S230).

Steps S210, S220, and S230 will hereinafter be described with reference to FIG. 8. FIG. 8 is a schematic view illustrating another exemplary application of the quantum homomorphic encryption method according to some embodiments of the present disclosure.

FIG. 8 illustrates a first qubit state 80 with n qubits and {n × (m - 1)} ancilla qubits generated by the homomorphic encryption system 10. Referring to FIG. 8, the homomorphic encryption system 10 may group one qubit from the first qubit state 80 with (m - 1) qubits from the ancilla qubits 81 and may thereby create a plurality of third qubit states 82. Thereafter, the homomorphic encryption system 10 may concatenate the third qubit states 82 and may thereby create a second qubit state 83.

Thereafter, referring back to FIG. 3, the homomorphic encryption system 10 may encrypt the second qubit state by performing a random permutation on each of the third qubit states. The encryption of the second qubit state will hereinafter be described with reference to FIG. 9. FIG. 9 is a schematic view illustrating another exemplary application of the quantum homomorphic encryption method according to some embodiments of the present disclosure.

Referring to FIG. 9, the homomorphic encryption system 10 may perform a random permutation on each of a plurality of third qubit states 90a, 90b, and 90c. In this manner, the homomorphic encryption system 10 may encrypt a second qubit state 91.

The quantum homomorphic encryption method according to some embodiments of the present disclosure has been described so far with reference to FIGS. 1 through 9. The hardware configuration of the homomorphic encryption system according to some embodiments of the present disclosure will hereinafter be described with reference to FIG. 10.

FIG. 10 is a hardware configuration view of an exemplary computing system 1000 not covered by the claims.

Referring to FIG. 10, the computing system 1000 may include at least one processor 1100, a bus 1600, a communication interface 1200, a memory 1400, which loads a computer program 1500 to be executed by the processor 1100, and a storage 1300, which stores the computer program 1500.

However, FIG. 10 illustrates only components relevant to embodiments of the present disclosure. Therefore, one of ordinary skill in the art to which the present disclosure pertains will understand that various general components may also be included in the computing system 1000 in addition to the components illustrated in FIG. 10. In other words, the computing system 1000 may further include various components in addition to those illustrated in FIG. 10. In some embodiments, the computing system 1000 may be configured without some of the components illustrated in FIG. 10. Each of the components of the computing system 1000 will hereinafter be described.

The processor 1100 may control the overall operations of the components of the computing system 100. The processor 1100 may be configured with at least one form of processor known in the art, such as a central processing unit (CPU), a microprocessor unit (MPU), a microcontroller unit (MCU), a graphics processing unit (GPU), a neural processing unit (NPU), or any other type of processor recognized in the technical field of the present disclosure. Additionally, the processor 1100 may perform operations related to at least one application or program to execute operations/methods according to various embodiments of the present disclosure. The computing system 1000 may be equipped with one or more processors 1100.

The memory 1400 may store various data, commands, and/or information. The memory 1400 may load the computer program 1500 from the storage 1300 to execute the operations/methods according to various embodiments of the present disclosure. The memory 1400 may be implemented as a volatile memory, such as a random-access memory (RAM), but the present disclosure is not limited thereto.

The bus 1600 may provide communication between the components of the computing system 1000. The bus 1600 may be implemented in various forms, including an address bus, a data bus, and a control bus.

The communication interface 1200 may support wired and wireless internet communication for the computing system 1000. Additionally, the communication interface 1200 may support various communication methods beyond Internet communication. To this end, the communication interface 1200 may be configured with well-known communication modules in the technical field of the present disclosure.

The storage 1300 may non-transitorily store at least one computer program 1500. The storage 1300 may be configured with nonvolatile memories such as a read-only memory (ROM), an erasable programmable ROM (EPROM), an electrically erasable programmable ROM (EEPROM), or a flash memory, hard disks, removable disks, or other forms of computer-readable media known in the technical field of the present disclosure.

The computer program 1500 may include one or more instructions that enable the processor 1100 to perform the operations/methods according to various embodiments of the present disclosure when loaded into the memory 1400. In other words, by executing the loaded instructions, the processor 1100 may perform the operations/methods according to various embodiments of the present disclosure.

For example, the computer program 1500 may include instructions for executing the operations of: creating a first qubit state that includes ancilla qubits, by performing quantum error correction encoding on data; creating a second qubit state that includes the first qubit state, by grouping the first qubit state; and encrypting the second qubit state by performing a random permutation on the second qubit state.

The hardware configuration of the computing system 1000 has been described so far with reference to FIG. 10.

So far, a variety of embodiments of the present disclosure and the effects according to embodiments thereof have been mentioned with reference to FIGS. 1 to 9 The effects according to the technical idea of the present disclosure are not limited to the forementioned effects, and other unmentioned effects may be clearly understood by those skilled in the art from the description of the specification.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications can be made to the preferred embodiments without substantially departing from the principles of the present disclosure. Therefore, the disclosed preferred embodiments of the disclosure are used in a generic and descriptive sense only and not for purposes of limitation, the scope of the invention being defined by the appended claims.

## Claims

1. A quantum homomorphic encryption method performed by a computing device, comprising:
creating a first qubit state (61) that includes ancilla qubits (81), by performing quantum error correction encoding on data (50);
creating a second qubit state (83, 91) that includes the first qubit state (61), by grouping the first qubit state (61); and
encrypting the second qubit state (83, 91) by performing a random permutation on the second qubit state (83, 91),
**characterized in that**
the creating the second qubit state (83, 91), comprises: generating as many ancilla qubits (81) as there are qubits included in the first qubit state (61); creating a plurality of third qubit states (82, 90a, 90b, 90c) by grouping the qubits included in the first qubit state (61) and the ancilla qubits (81); and concatenating the third qubit states (82, 90a, 90b, 90c),
wherein the encrypting the second qubit state (83, 91), comprises performing the random permutation on each of the third qubit states (82, 90a, 90b, 90c).

2. The quantum homomorphic encryption method of claim 1, wherein
the ancilla qubits (81) include maximally mixed state (MMS) qubits (51) and zero qubits (54), and
the creating the first qubit state (61), comprises: generating first data (52, 53) by padding the data (50) with the MMS qubits (51); generating second data (55, 60) by concatenating the first data (52, 53) and the zero qubits (54); and encoding the second data (55, 60), wherein encoding the second data (55, 60) results in the first qubit state (61) that includes ancilla qubits (81) to be created.

3. The quantum homomorphic encryption method of claim 2, wherein the encoding the second data (55, 60), comprises encoding the second data (55, 60) using a Calderbank-Shor-Steane (CSS) code.

4. The quantum homomorphic encryption method of claim 3, wherein the encoding the second data (55, 60), comprises encoding the second data (55, 60) using a doubly-even CSS code.

5. The quantum homomorphic encryption method of claim 5, wherein the generating as many ancilla qubits (81) as there are qubits included in the first qubit state (61), comprises generating (n × (m - 1)) ancilla qubits (81) if a number of the qubits included in the first qubit state (61) is n.

6. The quantum homomorphic encryption method of claim 5, wherein the creating the third qubit states (82, 90a, 90b, 90c), comprises grouping one qubit from the first qubit state (61) and (m - 1) qubits from the ancilla qubits (81) if a number of the qubits included in the first qubit state (61) is n and a number of the ancilla qubits (81) is (n × (m - 1).

7. A quantum homomorphic encryption system (10) comprising:
at least one processor (1100); and
a memory (1400) storing a computer program (1500), which is executed by the at least one processor (1100),
wherein the computer program (1500) includes instructions for performing operations of: creating a first qubit state (61) that includes ancilla qubits (81), by performing quantum error correction encoding on data (50); creating a second qubit state (83, 91) that includes the first qubit state (61), by grouping the first qubit state (61); and encrypting the second qubit state (83, 91) by performing a random permutation on the second qubit state (83, 91),
**characterized in that**
the operation of creating the second qubit state (83, 91), comprises: generating as many ancilla qubits (81) as there are qubits included in the first qubit state (61); creating a plurality of third qubit states (82, 90a, 90b, 90c) by grouping the qubits included in the first qubit state (61) and the ancilla qubits (81); and concatenating the third qubit states (82, 90a, 90b, 90c),
wherein the operation of encrypting the second qubit state (83, 91), comprises performing the random permutation on each of the third qubit states (82, 90a, 90b, 90c).

8. The quantum homomorphic encryption system (10) of claim 9, wherein
the ancilla qubits (81) include maximally mixed state (MMS) qubits (51) and zero qubits (54), and
the operation of creating the first qubit state (61), comprises: generating first data (52, 53) by padding the data (50) with the MMS qubits (51); generating second data (55, 60) by concatenating the first data (52, 53) and the zero qubits (54); and encoding the second data (55, 60), wherein encoding the second data (55, 60) results in the first qubit state (61) that includes ancilla qubits (81) to be created.

9. The quantum homomorphic encryption system (10) of claim 11, wherein the operation of generating as many ancilla qubits (81) as there are qubits included in the first qubit state (61), comprises generating (n × (m - 1)) ancilla qubits (81) if a number of the qubits included in the first qubit state (61) is n.

10. The quantum homomorphic encryption system (10) of claim 11, wherein the operation of creating the third qubit states (82, 90a, 90b, 90c), comprises grouping one qubit from the first qubit state (61) and (m - 1) qubits from the ancilla qubits (81) if a number of the qubits included in the first qubit state (61) is n and a number of the ancilla qubits (81) is (n × (m - 1).

## Patentansprüche

1. Homomorphes Quantenverschlüsselungsverfahren, das von einer Rechenvorrichtung durchgeführt wird, umfassend:
Erzeugen eines ersten Qubit-Zustands (61), der Hilfs-Qubits (81) beinhaltet, durch Durchführen einer Quantenfehlerkorrekturcodierung an Daten (50);
Erzeugen eines zweiten Qubit-Zustands (83, 91), der den ersten Qubit-Zustand (61) beinhaltet, durch Gruppieren des ersten Qubit-Zustands (61); und
Verschlüsseln des zweiten Qubit-Zustands (83, 91) durch Durchführen einer Zufallspermutation an dem zweiten Qubit-Zustand (83, 91),
**dadurch gekennzeichnet, dass**
das Erzeugen des zweiten Qubit-Zustands (83, 91) Folgendes umfasst: Generieren so vieler Hilfs-Qubits (81), wie Qubits in dem ersten Qubit-Zustand (61) beinhaltet sind; Erzeugen einer Mehrzahl von dritten Qubit-Zuständen (82, 90a, 90b, 90c) durch Gruppieren der in dem ersten Qubit-Zustand (61) beinhalteten Qubits und der Hilfs-Qubits (81); und Verketten der dritten Qubit-Zustände (82, 90a, 90b, 90c),
wobei das Verschlüsseln des zweiten Qubit-Zustands (83, 91) Durchführen der Zufallspermutation an jedem der dritten Qubit-Zustände (82, 90a, 90b, 90c) umfasst.

2. Homomorphes Quantenverschlüsselungsverfahren nach Anspruch 1, wobei
die Hilfs-Qubits (81) Qubits (51) mit einem maximal gemischten Zustand (MMS) und Null-Qubits (54) beinhalten, und
das Erzeugen des ersten Qubit-Zustands (61) Folgendes umfasst: Generieren von ersten Daten (52, 53) durch Auffüllen der Daten (50) mit den MMS-Qubits (51); Generieren von zweiten Daten (55, 60) durch Verketten der ersten Daten (52, 53) und der Null-Qubits (54);
und Codieren der zweiten Daten (55, 60), wobei das Codieren der zweiten Daten (55, 60) in dem ersten Qubit-Zustand (61) resultiert, der ein Erzeugen von Hilfs-Qubits (81) beinhaltet.

3. Homomorphes Quantenverschlüsselungsverfahren nach Anspruch 2, wobei das Codieren der zweiten Daten (55, 60) Codieren der zweiten Daten (55, 60) unter Verwendung eines Calderbank-Shor-Steane(CSS)-Codes umfasst.

4. Homomorphes Quantenverschlüsselungsverfahren nach Anspruch 3, wobei das Codieren der zweiten Daten (55, 60) Codieren der zweiten Daten (55, 60) unter Verwendung eines doppelt geraden CSS-Codes umfasst.

5. Homomorphes Quantenverschlüsselungsverfahren nach Anspruch 5, wobei das Generieren so vieler Hilfs-Qubits (81), wie Qubits in dem ersten Qubit-Zustand (61) beinhaltet sind, Generieren von (n × (m - 1)) Hilfs-Qubits (81), falls eine Anzahl der in dem ersten Qubit-Zustand (61) beinhalteten Qubits n ist.

6. Homomorphes Quantenverschlüsselungsverfahren nach Anspruch 5, wobei das Erzeugen der dritten Qubit-Zustände (82, 90a, 90b, 90c) Gruppieren eines Qubit aus dem ersten Qubit-Zustand (61) und von (m - 1) Qubits aus den Hilfs-Qubits (81), falls eine Anzahl der in dem ersten Qubit-Zustand (61) beinhalteten Qubits n ist und eine Anzahl der Hilfs-Qubits (81) (n × (m - 1) ist, umfasst.

7. Homomorphes Quantenverschlüsselungssystem (10), umfassend:
mindestens einen Prozessor (1100); und
einen Speicher (1400), der ein Computerprogramm (1500) speichert, das von dem mindestens einen Prozessor (1100) ausgeführt wird,
wobei das Computerprogramm (1500) Anweisungen zum Durchführen der folgenden Operationen umfasst:
Erzeugen eines ersten Qubit-Zustands (61), der Hilfs-Qubits (81) beinhaltet, durch Durchführen einer Quantenfehlerkorrekturcodierung an Daten (50);
Erzeugen eines zweiten Qubit-Zustands (83, 91), der den ersten Qubit-Zustand (61) beinhaltet, durch Gruppieren des ersten Qubit-Zustands (61); und
Verschlüsseln des zweiten Qubit-Zustands (83, 91) durch Durchführen einer Zufallspermutation an dem zweiten Qubit-Zustand (83, 91),
**dadurch gekennzeichnet, dass**
die Operation zum Erzeugen des zweiten Qubit-Zustands (83, 91) Folgendes umfasst: Generieren so vieler Hilfs-Qubits (81), wie Qubits in dem ersten Qubit-Zustand (61) beinhaltet sind; Erzeugen einer Mehrzahl von dritten Qubit-Zuständen (82, 90a, 90b, 90c) durch Gruppieren der in dem ersten Qubit-Zustand (61) beinhalteten Qubits und der Hilfs-Qubits (81); und
Verketten der dritten Qubit-Zustände (82, 90a, 90b, 90c),
wobei die Operation zum Verschlüsseln des zweiten Qubit-Zustands (83, 91) Durchführen der zufälligen Permutation an jedem der dritten Qubit-Zustände (82, 90a, 90b, 90c) umfasst.

8. Homomorphes Quantenverschlüsselungssystem (10) nach Anspruch 9, wobei
die Hilfs-Qubits (81) Qubits (51) mit einem maximal gemischten Zustand (MMS) und Null-Qubits (54) beinhalten, und
die Operation zum Erzeugen des ersten Qubit-Zustands (61) Folgendes umfasst: Generieren von ersten Daten (52, 53) durch Auffüllen der Daten (50) mit den MMS-Qubits (51); Generieren von zweiten Daten (55, 60) durch Verketten der ersten Daten (52, 53) und der Null-Qubits (54); und Codieren der zweiten Daten (55, 60), wobei das Codieren der zweiten Daten (55, 60) in dem ersten Qubit-Zustand (61) resultiert, der ein Erzeugen von Hilfs-Qubits (81) beinhaltet.

9. Homomorphes Quantenverschlüsselungssystem (10) nach Anspruch 11, wobei die Operation zum Generieren so vieler Hilfs-Qubits (81), wie Qubits in dem ersten Qubit-Zustand (61) beinhaltet sind, Generieren von (n × (m - 1)) Hilfs-Qubits (81), falls eine Anzahl der in dem ersten Qubit-Zustand (61) beinhalteten Qubits n ist, umfasst.

10. Homomorphes Quantenverschlüsselungssystem (10) nach Anspruch 11, wobei die Operation zum Erzeugen der dritten Qubit-Zustände (82, 90a, 90b, 90c) Gruppieren eines Qubit aus dem ersten Qubit-Zustand (61) und von (m - 1) Qubits aus den Hilfs-Qubits (81), falls eine Anzahl der in dem ersten Qubit-Zustand (61) beinhalteten Qubits n ist und eine Anzahl der Hilfs-Qubits (81) (n × (m - 1) ist, umfasst.

## Revendications

1. Procédé de chiffrement homomorphe quantique réalisé par un dispositif informatique comprenant :
la création d'un premier état de bit quantique (61) qui inclut des bits quantiques auxiliaires (81), en réalisant un codage de correction d'erreur quantique sur des données (50) ;
la création d'un deuxième état de bit quantique (83, 91) qui inclut le premier état de bit quantique (61), par regroupement du premier état de bit quantique (61) ; et
le chiffrement du deuxième état de bit quantique (83, 91) en réalisant une permutation aléatoire sur le deuxième état de bit quantique (83, 91),
**caractérisé en ce que**
la création du deuxième état de bit quantique (83, 91) comprend : la génération d'autant de bits quantiques auxiliaires (81) qu'il y a de bits quantiques inclus dans le premier état de bit quantique (61) ; la création d'une pluralité de troisièmes états de bit quantiques (82, 90a, 90b, 90c) en regroupant les bits quantiques inclus dans le premier état de bit quantique (61) et les bits quantiques auxiliaires (81) ; et la concaténation des troisièmes états de bit quantiques (82, 90a, 90b, 90c),
le chiffrement du deuxième état de bit quantique (83, 91) comprenant la réalisation de la permutation aléatoire sur chacun des troisièmes états de bit quantique (82, 90a, 90b, 90c).

2. Procédé de chiffrement homomorphe quantique selon la revendication 1,
les bits quantiques auxiliaires (81) comprenant des bits quantiques d'état mixte maximal (MMS) (51) et des bits quantiques nuls (54), et
la création du premier état de bit quantique (61) comprenant : la génération de premières données (52, 53) en remplissant les données (50) avec les bits quantiques MMS (51) ; la génération de secondes données (55, 60) en concaténant les premières données (52, 53) et les bits quantiques nuls (54) ; et le codage des secondes données (55, 60), le codage des secondes données (55, 60) aboutissant au premier état de bit quantique (61) qui inclut les bits quantiques auxiliaires (81) à créer.

3. Procédé de chiffrement homomorphe quantique selon la revendication 2, le codage des secondes données (55, 60) comprenant le codage des secondes données (55, 60) en utilisant un code Calderbank-Shor-Steane (CSS).

4. Procédé de chiffrement homomorphe quantique selon la revendication 3, le codage des secondes données (55, 60) comprenant le codage des secondes données (55, 60) en utilisant un code CSS doublement pair.

5. Procédé de chiffrement homomorphe quantique selon la revendication 5, la génération d'autant de bits quantiques auxiliaires (81) qu'il y a de bits quantiques inclus dans le premier état de bit quantique (61), comprenant la génération de (n × (m - 1)) bits quantiques auxiliaires (81) si un nombre de bits quantiques inclus dans le premier état de bit quantique (61) est n.

6. Procédé de chiffrement homomorphe quantique selon la revendication 5, la création des troisièmes états de bit quantiques (82, 90a, 90b, 90c) comprenant le regroupement d'un bit quantique à partir du premier état de bit quantique (61) et de (m - 1) bits quantiques à partir des bits quantiques auxiliaires (81) si un nombre des bits quantiques inclus dans le premier état de bit quantique (61) est n et qu'un nombre des bits quantiques auxiliaires (81) est (n × (m - 1).

7. Système de chiffrement homomorphe quantique (10) comprenant :
au moins un processeur (1100) ; et
une mémoire (1400) stockant un programme informatique (1500) exécuté par l'au moins un processeur (1100),
le programme informatique (1500) comprenant des instructions pour réaliser les opérations de : création d'un premier état de bit quantique (61) qui inclut des bits quantiques auxiliaires (81), en réalisant un codage de correction d'erreur quantique sur des données (50) ;
création d'un deuxième état de bit quantique (83, 91) qui inclut le premier état de bit quantique (61), en groupant le premier état de bit quantique (61) ; et chiffrement du deuxième état de bit quantique (83, 91) en réalisant une permutation aléatoire sur le deuxième état de bit quantique (83, 91),
**caractérisé en ce que**
l'opération de création du deuxième état de bit quantique (83, 91) comprend : la génération d'autant de bits quantiques auxiliaires (81) qu'il y a de bits quantiques inclus dans le premier état de bit quantique (61) ; la création d'une pluralité de troisièmes états de bit quantiques (82, 90a, 90b, 90c) en regroupant les bits quantiques inclus dans le premier état de bit quantique (61) et les bits quantiques auxiliaires (81) ; et la concaténation des troisièmes états de bit quantiques (82, 90a, 90b, 90c),
l'opération de chiffrement du deuxième état de bit quantique (83, 91) comprenant la réalisation de la permutation aléatoire sur chacun des troisièmes états de bit quantique (82, 90a, 90b, 90c).

8. Système de chiffrement homomorphe quantique (10) selon la revendication 9,
les bits quantiques auxiliaires (81) comprenant des bits quantiques d'état mixte maximal (MMS) (51) et des bits quantiques nuls (54), et
l'opération de création du premier état de bit quantique (61) comprenant : la génération de premières données (52, 53) en remplissant les données (50) avec les bits quantiques MMS (51) ; la génération de secondes données (55, 60) en concaténant les premières données (52, 53) et les bits quantiques nuls (54) ; et le codage des secondes données (55, 60), le codage des secondes données (55, 60) aboutissant au premier état de bit quantique (61) qui inclut des bits quantiques auxiliaires (81) à créer.

9. Système de chiffrement homomorphe quantique (10) selon la revendication 11, l'opération de génération d'autant de bits quantiques auxiliaires (81) qu'il y a de bits quantiques inclus dans le premier état de bit quantique (61), comprenant la génération de (n × (m - 1)) bits quantiques auxiliaires (81) si un nombre de bits quantiques inclus dans le premier état de bit quantique (61) est n.

10. Système de chiffrement homomorphe quantique (10) selon la revendication 11, l'opération de création des troisièmes états de bit quantiques (82, 90a, 90b, 90c) comprenant le regroupement d'un bit quantique à partir du premier état de bit quantique (61) et de (m - 1) bits quantiques à partir des bits quantiques auxiliaires (81) si un nombre des bits quantiques inclus dans le premier état de bit quantique (61) est n et qu'un nombre des bits quantiques auxiliaires (81) est (n × (m - 1).
